# EUROPEAN PATENT APPLICATION

(11) **EP 4 184 390 A1**
(43) Date of publication of application: **24.05.2023**
(21) Application number: 21209773.7
(22) Date of filing: 23.11.2021
(51) Int. Cl.: G06N 3/04, G06N 3/08

(54) **EVALUATING TEMPORAL SEQUENCES OF MEASUREMENT VALUES IN INDUSTRIAL PLANTS**

(71) Applicant: ABB SCHWEIZ AG, 5400 Baden (CH)
(72) Inventor: GARTLER, Marco, 69221 Dossenheim (DE); TAN, Ruomu, 68163 Mannheim (DE); SONG, Chen, 69115 Heidelberg (DE); MACZEY, Sylvia, 69493 Hirschberg (DE); KLOEPPER, Benjamin, 68199 Mannheim (DE); DATHATRI, Ashwini Gonibedu, 39108 Magdeburg (DE)
(74) Representative: Maiwald GmbH

(57) **Abstract**

A computer-implemented method (100) for evaluating at least one multivariate temporal sequence (2) of measurement values obtained from an industrial plant (1) with respect to at least one sought property and/or quantity (3) that serves to improve the multivariate temporal sequence (2), and/or that is indicative of an operating state, and/or of a key performance indicator, of the industrial plant (1) or a process executed on it, the method (100) comprising the steps of:
• encoding (110), by at least one trained encoder network (4), the at least one sequence of measurement values (2) into a representation (2a) with a predetermined dimensionality that is independent of the length of the sequence (2) in time; and
• evaluating (120), from this representation (2a), the sought property and/or quantity (3).

## Description

### FIELD OF THE INVENTION

The invention relates to the monitoring and control of industrial plants, and in particular to the determining, from multivariate temporal sequences of measurement values, of properties and/or quantities that are useful for decisions how to further run the plant.

### BACKGROUND

Many industrial machine learning (ML) applications require training models on segments of process data (across multiple signals) of variable length. Examples of variable length segments are (1) operations or phases in batch operated chemical plants; (2) maintenance activities; (3) load changes in continuous plants. Alignment methods (dynamic time-warping (DTW) or global-alignment kernel (GAK)) can be used to train ML on such variable length samples. Whenever runtime is critical, e.g. with users interacting with an analytics systems, or when making online predictions, or finding similar past situations, this is an issue. Another alternative is the usage of recurrent neural networks or transformer networks, for which only a lot of sample effect a change in model parameters. This contradicts the objective of AL to label as few instances a possible.

### OBJECTIVE OF THE INVENTION

It is therefore the objective of the present invention to allow for a faster determination of sought properties or quantities from multivariate temporal sequences of measurement values that have a variable length.

This objective is achieved by a first method for evaluating at least one multivariate temporal sequence of measurement values according to a first independent claim, and a second method according to a second independent claim for training an encoder network for use in the first method. Further advantageous embodiments are detailed in the respective dependent claims.

### DISCLOSURE OF THE INVENTION

The invention provides a computer-implemented method for evaluating at least one multivariate temporal sequence of measurement values obtained from an industrial plant. Such a multivariate temporal sequence comprises time series of measurement values of multiple quantities acquired in the industrial plant.

The goal of this evaluation is to obtain at least one sought property and/or quantity that serves to improve the multivariate temporal sequence, and/or that is indicative of an operating state, and/or of a key performance indicator, of the industrial plant or a process executed on it. In essence, the sought property and/or quantity is a processing result that is a better basis for decisions how to run the plant in the future than the originally inputted multivariate temporal sequence.

In the course of this method, the at least one sequence of measurement values is encoded into a representation with a predetermined dimensionality that is independent of the length of the sequence in time. That is, the representation may be a vector, a matrix or a tensor with fixed dimensions. The number of entries in this vector, matrix or tensor is typically much lower than the number of values in the originally inputted multivariate sequence. From this representation, the sought property or quantity is determined. The so-determined property or quantity may be used for monitoring the plant or a process executed thereon, but also to control the plant or process. For example, the sought property or quantity may be related to a recommendation what to do and hence help controlling the plant or process. Also, the representation may be used in a reinforcement learning task.

There are many reasons why sequences of measurement values may be of variable length. For example, data points may be missing in a time series, sampling rates may be varied during acquisition of data, or sequences of measurement values from different plants with different instrumentation and hence different available signals may need to be combined.

The inventors have found that encoding the sequence of measurement values in this manner, rather than aligning multiple multivariate temporal sequences of different lengths to one another, has a two-fold speed-up effect.

First, a forward pass through the encoder network is a lot faster than alignment using the DTW or GAK method. These alignment methods involve solving an optimization problem every time from scratch. Training an encoder to produce representations costs much more time initially to solve a much more complex optimization problem, but this needs to be done only once. After that, a forward pass that maps a multivariate temporal sequence to a representation is a lot faster because the complex optimization problem is already finished and the inference computation of the encoder network is straight-forward. In a simple analogy, alignment by means of solving an optimization problem is comparable to swimming across a river, while the training of the encoder is comparable to building a bridge across the river, and the forward pass through the encoder is comparable to driving over the bridge in a car. If one needs to cross the river only once, swimming is the way to go. But if one needs to cross the river time and time again every day, there comes a break-even, and then it becomes the better deal to build the bridge and then use it.

Second, the lower dimensionality of the representation also speeds up the evaluation itself because a lesser amount of information has to be processed. For example, if a task neural network is used for the processing of the representation with respect to a given task, this can be much smaller than a neural network adapted for processing a complete multivariate temporal sequence.

When monitoring an industrial process, the real-time behavior is a lot more important than the computational cost of training. For example, the earlier the evaluation is finished and indicates that something is going wrong with an industrial process being executed on the industrial plant, the higher the chance that this may be remedied by performing an appropriate action. Speed may be very important here. For example, if the quality of a product produced by the process is dependent on hard limits being observed (such as a maximum temperature that is never to be exceeded even momentarily), and the process is approaching such a hard limit, a quick corrective action may make all the difference between being able to continue working on the batch of product or having to discard the batch.

Also, if the dimensionality of the input is lower, the task neural network needs a lesser amount of training samples for training. Ground truth labels for supervised training of task networks may be hard and expensive to get. For example, determining the actual quality of a batch of a chemical product may require an analysis in a lab that takes several hours. Determining the actual quality of a solid product may only be possible using a destructive method. For example, the rupture load of a product may be measured only by applying progressively more force to it until it actually breaks.

In a particularly advantageous embodiment, the encoder network is chosen to be an encoder part of an encoder-decoder arrangement that is trained in a self-supervised manner. In one particularly advantageous embodiment, the encoder-decoder arrangement first maps a multivariate temporal sequence of measurement values to a representation and then reconstructs the multivariate temporal sequence of measurement values from this representation. One way to train the encoder-decoder arrangement in a self-supervised manner is to check how well the reconstructed multivariate temporal sequence is in agreement with the originally inputted multivariate temporal sequence, thereby obtaining feedback for the training. But there are more ways to train in a self-supervised manner. Examples include:
- predicting one or more next time steps in the multivariate temporal sequence;
- identifying which one of several candidate sequences is the correct continuation of the multivariate temporal sequence (which is, in essence, a recasting of a prediction problem into a classification problem); and
- identifying correct previous segments of the multivariate temporal sequence
All self-supervised manners of training have on common that no labelling of the multivariate temporal sequence with "ground truth" is necessary for this training to work. Rather, the "ground truth" for the self-supervised training is easily derivable from the unlabeled training data itself.

Moreover, training for a reconstruction in this manner trains the encoder-decoder arrangement to force the part of the input that is most salient for the reconstruction through the "information bottleneck" of the low-dimensional representation. This eliminates less important portions of the input, such as noise. Therefore, the encoder also gets some de-noising functionality by virtue of the training.

Basically, the representations may be evaluated in any manner that was previously used for aligned multivariate temporal sequences. But the lower dimensionality of the representations also opens up new possibilities for evaluation, or facilitates the use of previous evaluation methods.

In a particularly advantageous embodiment, the evaluating of the sought property and/or quantity comprises:
- evaluating distances and/or similarities between representations obtained from multiple multivariate temporal sequences; and/or
- grouping representations obtained from multiple multivariate temporal sequences into one or more clusters.

For example, k-means clustering may be used to partition a large number of representations into a given number k of clusters. The sought property and/or quantity may then be inferred from the membership of the representation in a particular cluster.

Also, distances and similarities between representations are surprisingly good indications how similar plant situations encoded in these similarities are in terms of the well-being of the process being executed.

In a simple example, the multivariate temporal sequences of measurement values may comprise measurement values that are indicative of the operating states of three parallel pumps for pumping a fluid. A first sample sequence may relate to a situation where the first pump is ailing, a second sample sequence may relate to a situation where the second pump is ailing, and a third sample sequence may relate to a situation where the third pump is ailing. The three sample sequences may also have different lengths. Nonetheless, they will all be mapped to similar representations because they all basically relate to the same technical effect: At least one pump is ailing, and the pumping of the required flow of fluid is in jeopardy. Generally speaking, if two multiple temporal sequences of measurement values cause similar behaviors later on, their representations tend to be similar.

In a particularly advantageous embodiment, the representations are grouped into one single cluster. In response to a representation not being a member of this one single cluster, the multivariate temporal sequence from which this representation was derived is determined to be indicative of an abnormal operating state and/or key performance indicator of the industrial plant. The operating state of the plant is, fortunately, normal for most of the time. It is therefore to be expected that the representations that relate to normal operating states will agglomerate in the one single cluster.

In a further advantageous embodiment, the evaluating of the sought property and/or quantity comprises:
- computing at least one statistical quantity over a collection of representations obtained from multiple multivariate temporal sequences; and
- evaluating the sought property and/or quantity from the at least one statistical quantity.

Because the most salient information of the multivariate temporal sequences is compressed in the representation, the statistical quantity is likely to be more closely related to the actual operating state of the plant. Therefore, the sought property and/or quantity derived from the statistical quantity is likely to be more accurate.

In a further particularly advantageous embodiment, the evaluating of the sought property and/or quantity comprises mapping, by means of a trained task machine learning model, the representation to the sought property and/or quantity. This machine learning model may be of any suitable type. For example, the machine learning model may comprise a support vector machine, a gradient-boosting tree, or a logistic regressor. But the machine learning model may also be a neural network, and in particular, it may be a fully connected neural network. As discussed before, due to the lower dimensionality of the representations compared with the original multivariate temporal sequence, such a network becomes easier to train and faster to execute.

In particular, the trained task machine learning model may be chosen to comprise a classifier, and/or a regressor, and/or a reinforcement learner. For example, the classifier may assign a discrete rating to the operating state of the industrial plant, or to a key performance indicator, such as the quality of manufactured product. In a simple example, a manufactured product may be classified "OK" or "not OK = NOK". A regressor may be trained to estimate quantities that are key performance indicators but cannot be measured directly. For example, the rupture load of a product cannot be measured without actually destroying the product, so it needs to be estimated. A reinforcement learner may take representations as input and produce recommended control actions as output. For example, any arbitrary key performance indicator, KPI, may then be used to calculate the final reward of the reinforcement learner.

In another particularly advantageous embodiment, the evaluating of the sought property comprises mapping, by the trained task machine learning model, multiple representations of multiple multivariate temporal sequences to a temporally aligned composition of the multiple multivariate temporal sequences. In this context, temporal alignment means that the sequences are modified in the time dimension with the goal to make them as similar as this is possible given the content of the respective sequences. That is, the temporally aligned composition specifically highlights similarities and differences between the multiple multivariate temporal sequences that are present in other dimensions than the time dimension. This rendering of the multiple multivariate temporal sequences is particularly advantageous for anomaly detection. Anomalies may be recognized from the aligned composition by any suitable method, or even by visual inspection.

For example, the multiple multivariate temporal sequences may be fed through multiple copies of the encoder network ("Siamese networks") at once, or they may be fed through one and the same encoder network one after the other. This yields representations of the multivariate temporal sequences. A trained alignment network may accept these multiple representations as inputs and map them to the sought temporally aligned composition.

Likewise, from one or more representations of multivariate temporal sequences, other renderings of these one or more sequences may also be created by other known methods such as t-sne, umap or trimap. For example, such renderings are useful for clustering of multivariate temporal sequences according to desired criteria. Such clustering may highlight similarities between the sequences and aid the labelling of their representations for training a task machine learning model. For example, by virtue of multiple sequences having representations that are members of one and the same cluster, it may be inferred that all these representations need to have the same label. Thus, the label only has to be determined once for one representation.

As discussed before, the saving of labelling effort is particularly advantageous in a setting where the obtaining of labels is expensive. For example, in an active learning setup where the task machine learning model asks a domain expert for the labelling of particular representations from which the further training will benefit most, each such query costs manual effort on the side of the domain expert.

In a further particularly advantageous embodiment, using the sought property and/or quantity, at least one action is determined that is to be taken in the industrial plant in order to improve the property and/or quantity. For example, this property and/or quantity may be a property and/or quantity that is not directly measurable in real-time during a production process, but relevant for the quality of a product being manufactured. By determining the property and/or quantity indirectly but much faster from the multivariate temporal sequence of measurement values, a closed feedback loop may be established, so that the process executed on the industrial plant may be actively steered to optimize the relevant property and/or quantity.

One exemplary process where this is particularly advantageous is butadiene production. Assessing the quality of the finished product requires a lab analysis that takes on the order of hours. But the quantities that are analyzed in the lab may be predicted on-line using the present method quickly enough such that, in the event of a deviation from the required quality, the process can be steered to bring the quality back on track again.

Another exemplary process is the combustion of waste in a waste incineration plant. Here, important goals are that the combustion produces the least possible amount of certain pollutants, and of solid ash that has to be disposed of. The quantity of ash can only be determined after the combustion has finished, and the emission of some pollutants may not be measurable online. With the present method, the quantity of ash and the pollutants may be predicted. The combustion may then be steered such that less ash or less pollutant is produced. For example, the temperature of the combustion may be raised by adding more air or supplementary fuel, such as oil or gas.

The sought property and/or quantity may also, for example, be indicative of a propensity for an undesired event in the plant, such as a stoppage of the process that is being executed, a failure or damage of equipment, or a safety-relevant event. If this propensity can be predicted online, the process may be steered so as to avoid such undesired events.

When determining actions, the better comparability of different multivariate temporal sequence in the space of representations may be exploited. Thus, in a further particularly advantageous embodiment, in response to determining that a first representation is close and/or similar to a second representation as per a predetermined criterion, a to-be-taken action in the plant that is stored in association with the first representation is determined as a to-be-taken action in a situation characterized by the second representation. By re-using solutions in this manner, the response time can be speeded up even further because the further evaluation of the representation by a task machine learning model may be skipped: The re-using may be triggered on the basis of the representation already.

As discussed before, the method is particularly advantageous in industrial plants such as
- a production plant for:
   ∘ at least one chemical mixture and/or compound, and in particular: butadiene, and/or a liquid detergent, and/or a color, and/or a coating; and/or
   ∘ at least one food or beverage, and in particular an at least partially fermented food or beverage; and/or
   ∘ plastic pellets; and/or
- a waste incineration plant;
- a hydrocarbon separation plant;
- a reinjection system for injecting water into a hydrocarbon well;
- a hydrocarbon exploitation facility; and/or
- a deglycol regeneration plant.

Generally speaking, the method is particularly advantages in continuous or process plants that emit alarms and events data.

The invention also provides a computer-implemented method for training at least one encoder network for use in the method described above.

In the course of this method, an encoder-decoder arrangement is provided. This encoder-decoder arrangement comprises the to-be-trained encoder network and a to-be-trained decoder network.

A plurality of training samples is obtained. Each such training sample comprises a multivariate temporal sequence of measurement values from an industrial plant. Each training sample is then processed as follows:
The multivariate temporal sequence is encoded into a representation by the to-be-trained encoder network. A multivariate temporal sequence of values is then decoded from this representation by the to-be-trained decoder network. By means of a predetermined loss function, it is measured to which extent the decoded multivariate sequence is in agreement with the original multivariate temporal sequence in the training sample. Parameters that characterize the behavior of the to-be-trained encoder and the to-be-trained decoder are then optimized such that, when further training samples are processed, the rating by the loss function is likely to improve.

As discussed before, this self-supervised training does not require the training samples to be labelled with ground truth. This means that labels are only required for the training of a task machine learning model, which is made a lot easier because the representations have a much lower dimensionality than the original multivariate sequences.

In a simple analogy, the self-supervised training is comparable to driving to a hikers' parking lot that is two-thirds up the height of a mountain, and the supervised training of the task machine learning model is comparable to the remaining hike to the top of the mountain.

Moreover, the training of the encoder network is re-usable for multiple tasks performed by different task machine learning models. In said analogy, after having expended fuel once to drive up to the hikers' parking lot, hikes to multiple places may be started.

In a particularly advantageous embodiment, a given multivariate temporal sequence of measurement values is sub-divided into multiple sub-sequences. These sub-sequences are used as multivariate temporal sequences in the training samples. In this manner, by merely changing the sub-division, one and the same given multivariate temporal sequence may yield a large quantity of training samples. For example, lengths of temporal sequences to be created from one and the same given multivariate temporal sequence may be sampled from a random distribution.

In a further particularly advantageous embodiment, the training is expanded to a training for a temporal alignment of multiple multivariate temporal sequences. That is, the encoder network may first be trained in the self-supervised manner as described above, and based on this self-supervised training, it may be trained further as described below.

On top of the encoder network, at least one to-be-trained alignment network is provided. This alignment network is configured to map multiple representations to a temporally aligned composition of multiple multivariate temporal sequences of measurement values.

Alignment training samples are provided. Each such alignment training sample comprises multiple multivariate temporal sequences of measurement values, as well as a temporally aligned composition of these multiple multivariate temporal sequences as ground truth. This ground truth may be procured in any suitable manner. For example, previous techniques such as DTW or GAK may be used to obtain the ground truth. But manually aligned compositions may be used as ground truth as well.

For each alignment sample, the multivariate temporal sequences in this alignment sample are encoded to representations. The alignment network decodes these representations to a temporally aligned composition of the multiple multivariate temporal sequences.

By means of an alignment loss function, it is then measured to which extent this temporally aligned composition is in agreement with the ground truth temporally aligned composition. Parameters that characterize the behavior of the encoder network and the alignment network are optimized such that, when further alignment training samples are processed, the rating by the alignment loss function is likely to improve.

This means that after having been pre-trained with the original loss function, the encoder network is trained further based on a different loss function and on different training samples.

In one particularly advantageous example, the DTW objective function may be directly re-used as the loss function. This has the benefit that the loss can be calculated in a simple manner and that it is also comparable to ratings of the objective function for previous DTW solutions. Only the manner in which the aligned composition is obtained is changed.

In another particularly advantageous example, the deviation of the temporally aligned composition from one or more already known-good temporally aligned compositions may be measured. For example, the root mean-square error may be used for this measurement. This has the benefit that the loss may be tailored to fit detailed knowledge about the domain of application. For example, if a certain artifact or other feature in the multivariate temporal sequence is known to be important for the application at hand, the loss function may ensure that this important artifact or other feature is still present in the temporally aligned composition.

Actually, given good examples are the easiest way to specify the loss. But deciding whether an example is "good" or "not good" may require visual inspection by a domain expert. Therefore, in this context, it is particularly advantageous that, by virtue of the generic pre-training, less training examples are needed for the specific training for the task of alignment.

The training, and thus the subsequent generation of the temporally aligned composition, may advantageously be made to satisfy any desired constraints. For example, a term that penalizes the violation of a constraint may be added to the loss function. With previous methods for temporal alignment, such as DTW or GAK, it is a lot more difficult to perform the optimization under arbitrary constraints.

As discussed before, the methods are computer-implemented. The invention therefore also relates to one or more computer programs with machine-readable instructions that, when executed on one or more computers and/or compute instances, cause the one or more computers to perform a method described above. In this context, a virtualization platform, a hardware controller, network infrastructure devices (such as switches, bridges, routers or wireless access points), as well as end devices in the network (such as sensors, actuators or other industrial field devices) that are able to execute machine readable instructions are to be regarded as computers as well.

The invention therefore also relates to a non-transitory storage medium, and/or to a download product, with the one or more computer programs. A download product is a product that may be sold in an online shop for immediate fulfillment by download. The invention also provides one or more computers and/or compute instances with the one or more computer programs, and/or with the one or more non-transitory machine-readable storage media and/or download products.

### DESCRIPTION OF THE FIGURES

In the following, the invention is illustrated using Figures without any intention to limit the scope of the invention. The Figures show:
Figure 1: Exemplary embodiment of the method 100 for evaluating at least one multivariate temporal sequence 2 of measurement values obtained from an industrial plant 1 with respect to at least one sought property and/or quantity;
Figure 2: Exemplary embodiment of the method 200 for training at least one encoder network 4;
Figure 3: Application of the method 100 to the alignment of multivariate temporal sequences 2.

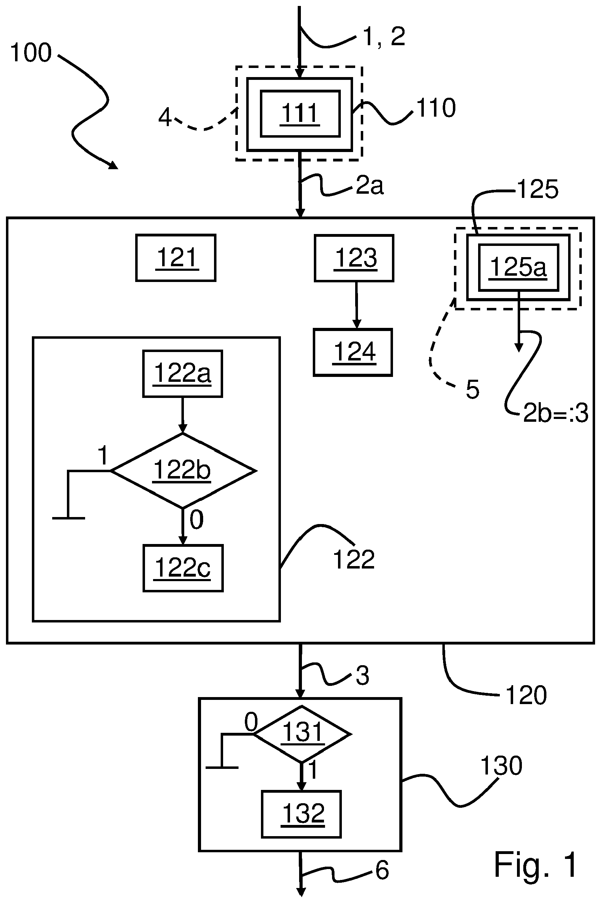

Figure 1 is a schematic flow chart of an embodiment of the method 100. The method starts from at least one multivariate temporal sequence 2 of measurement values obtained from an industrial plant 1.

In step 110, the at least one sequence of measurement values 2 is encoded into a representation 2a with a predetermined dimensionality that is independent of the length of the sequence 2 in time, by means of at least one trained encoder network 4.

According to block 111, the encoder network 4 may be chosen to be an encoder part of an encoder-decoder arrangement that is trained in a self-supervised manner. In particular, this encoder-decoder arrangement may first map a multivariate temporal sequence 2 of measurement values to a representation 2a and then reconstruct the multivariate temporal sequence 2 of measurement values from this representation 2a.

In step 120, from the representation 2a, a sought property and/or quantity 3 is evaluated. This property and/or quantity may improve the multivariate temporal sequence 2 itself. For example, gaps in the sequence 2 may be filled, or corrupt data may be corrected. Alternatively or in combination to this, the sought property and/or quantity may be indicative of an operating state, and/or of a key performance indicator, of the industrial plant 1 or a process executed on it.

According to block 121, distances and/or similarities between representations 2a obtained from multiple multivariate temporal sequences 2 may be evaluated.

According to block 122, representations 2a obtained from multiple multivariate temporal sequences 2 may be grouped into one or more clusters.

According to block 122a, the representations 2a may be grouped into one single cluster. It may then be checked in block 122b whether each representation 2a is a member of this one single cluster. If this is not the case (truth value 0), then, according to block 122c, the multivariate temporal sequence 2 from which this representation 2a was derived may be determined to be indicative of an abnormal operating state and/or key performance indicator.

According to block 123, at least one statistical quantity may be computed over a collection of representations 2a obtained from multiple multivariate temporal sequences 2. According to block 124, the sought property and/or quantity 3 may then be evaluated from this at least one statistical quantity.

According to block 125, the representation 2a may be mapped to the sought property and/or quantity 3 by means of a trained task machine learning model 5. According to block 125a, multiple representations 2a of multiple multivariate temporal sequences 2 may be mapped to a temporally aligned composition 2b of the multiple multivariate temporal sequences 2 by the trained task machine learning model 5.

In step 130, using the sought property and/or quantity 3, at least one action 6 to be taken in the industrial plant 1 is determined with the goal of improving the property and/or quantity 3. That is, the sought property and/or quantity 3 is used as a feedback for improvement of the performance of the industrial plant 1, and/or of the process being executed on it.

According to block 131, it may be determined whether a first representation 2a is close and/or similar to a second representation 2a as per a predetermined criterion. If this is the case (truth value 1), then, according to block 132, a to-be-taken action 6 in the plant 1 that is stored in association with the first representation 2a may be determined as a to-be-taken action 6 in a situation characterized by the second representation 2a.

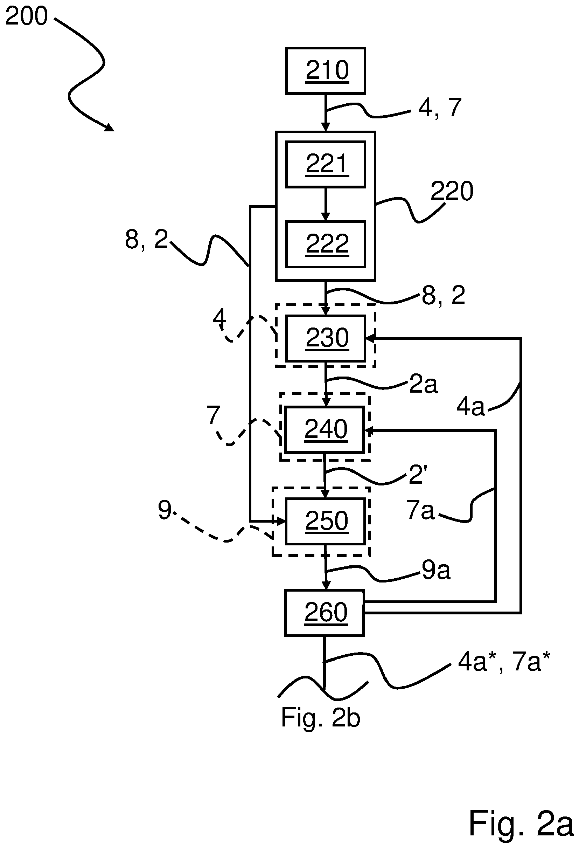

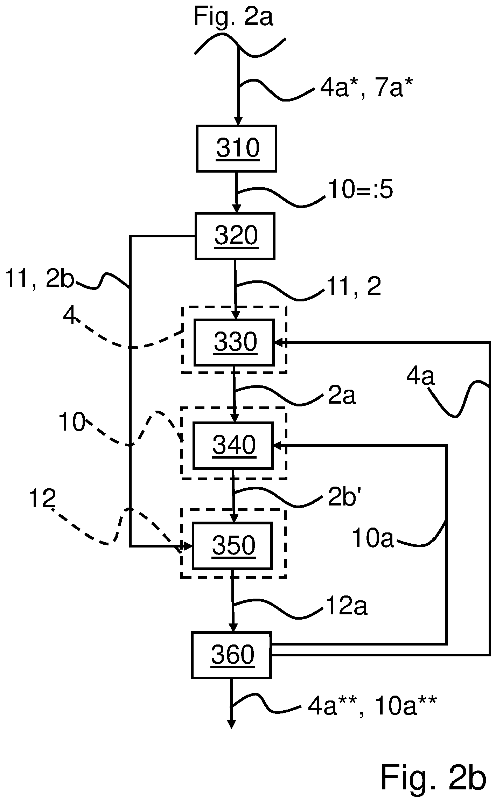

Figure 2 is a schematic flow chart of an exemplary embodiment of the method 200 for training at least one encoder network 4.

In step 210, an encoder-decoder arrangement comprising the to-be-trained encoder network 4 and a to-be-trained decoder network 7 is provided.

In step 220, a plurality of training samples 8 is obtained. Each training sample 8 comprising a multivariate temporal sequence 2 of measurement values from an industrial plant.

For each training sample 8, in step 230, the multivariate temporal sequence 2 contained therein is encoded into a representation 2a by the to-be-trained encoder network 4.

In step 240, a multivariate temporal sequence 2' of values is decoded from the representation 2a by the to-be-trained decoder network 7.

In step 250, a predetermined loss function 9 measures to which extent the reconstructed multivariate sequence 2' is in agreement with the multivariate temporal sequence 2 in the training sample 8.

In step 260, parameters 4a, 8a that characterize the behavior of the to-be-trained encoder 4 and the to-be-trained decoder 7 are optimized such that, when further training samples 8 are processed, the rating 9a by the loss function 9 is likely to improve. The finally optimized state of the parameters 4a and 7a is labelled with the reference signs 4a* and 7a*, respectively.

Optionally, the encoder network 4 may be trained further to aid in the alignment of multiple multivariate temporal sequences 2 of measurement values.

To this end, in step 310, at least one to-be-trained alignment network 10 is provided. This alignment network 10 is configured to map multiple representations 2a to a temporally aligned composition 2b of multiple multivariate temporal sequences (2) of measurement values. In its trained state, the alignment network 10 can be used as the task machine learning model 5 in the method 100 described above.

In step 320, alignment training samples 11 are provided. Each alignment training sample 11 comprises multiple multivariate temporal sequences 2 of measurement values, as well as a temporally aligned composition 2b of these multiple multivariate temporal sequences 2 as ground truth.

In step 330, the multivariate temporal sequences 2 in the alignment training samples 11 are encoded to representations 2a by the encoder network 4.

In step 340, the representations 2a are decoded to a temporally aligned composition 2b' of the multiple multivariate temporal sequences 2 by the at least one alignment network 10.

In step 350, an alignment loss function 12 measures to which extent the decoded temporally aligned composition 2b' is in agreement with the ground truth temporally aligned composition 2b from the alignment training sample 11.

In step 360, parameters 4a, 10a that characterize the behavior of the encoder network 4 and the alignment network 10 are optimized such that, when further alignment training samples 11 are processed, the rating 12a by the alignment loss function 12 is likely to improve. The finally optimized state of the parameters 4a and 10a is labelled with the reference signs 4a** and 10a**, respectively.

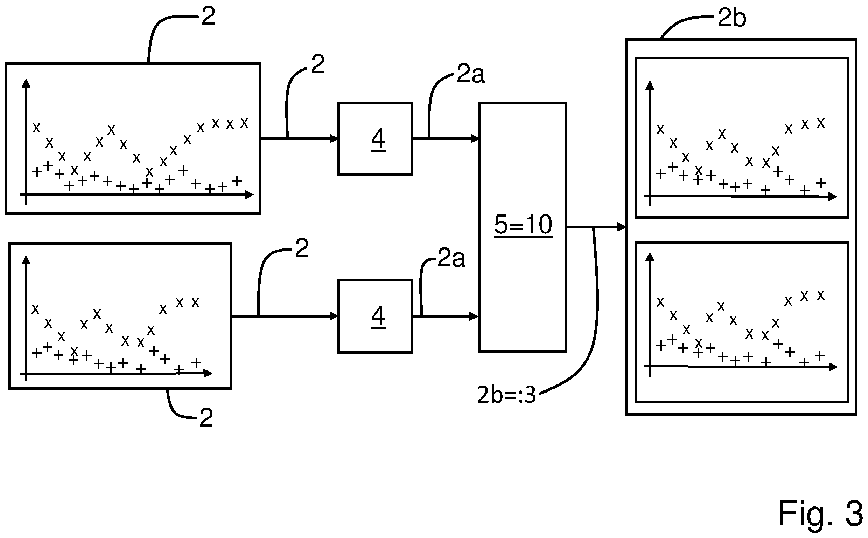

Figure 3 illustrates the application of the method 100 to the alignment of two multivariate temporal sequences 2.

Each multivariate temporal sequence 2 is encoded into a respective representation 2a by the trained encoder network 4. Both representations 2a are fed into the alignment network 10 that serves as the task machine learning model 5. The alignment network 10 computes a temporally aligned composition 2b of the multivariate temporal sequences 2 as the sought property and/or quantity 3.

### List of reference signs:

- 1: industrial plant
- 2: multivariate temporal sequence
- 2': reconstructed multivariate temporal sequence 2
- 2a: representation of sequence 2
- 2b: temporally aligned composition of multiple sequences 2
- 2b': composition determined during training
- 3: sought property and/or quantity
- 4: encoder network
- 4a: parameters, characterize behavior of encoder network 4
- 4a*: optimized state of parameters 4a
- 4a**: further trained state of parameters 4a for alignment
- 5: task machine learning model
- 6: action to be taken in plant 1
- 7: decoder network
- 7a: parameters, characterize behavior of decoder network 7
- 7a*: optimized state of parameters 7a
- 8: training sample for arrangement of encoder 4, decoder 7
- 9: loss function for training of encoder 4, decoder 7
- 9a: rating by loss function 9
- 10: alignment network
- 10a: parameters, characterize behavior of alignment network 10
- 10a**: optimized state of parameters 10a
- 11: training samples for alignment
- 12: loss function for training of alignment
- 12a: rating by loss function 12
- 100: method for deriving quantity/property 3 from sequence 2
- 110: encoding sequence 2 into representation 2a
- 111: choosing encoder network 4 from encoder-decoder arrangement
- 120: evaluating property and/or quantity 3 from representation 2a
- 121: evaluating distances and/or similarities
- 122: grouping representations 2a into clusters
- 122a: grouping into one single cluster
- 122b: checking whether representation 2a is member of single cluster
- 122c: determining presence of abnormal state/key performance indicator
- 123: computing statistical quantity over collection of representations 2a
- 124: evaluating property/quantity 3 from statistical quantity
- 125: evaluating property/quantity 3 with task machine learning model 5
- 125a: computing temporally aligned composition 2b with model 5
- 130: determining action 6 to be taken in industrial plant 1
- 131: checking whether representations 2a are similar/close to each other
- 132: re-using action 6 stored in association with one representation 2a
- 200: method for training at least one encoder network 4
- 210: providing arrangement of encoder network 4, decoder network 7
- 220: obtaining training samples 8
- 230: encoding sequence 2 in each training sample 8 to representation 2a
- 240: decoding temporal sequence 2' from representation 2a
- 250: measuring agreement between sequences 2' and 2
- 260: optimizing parameters 4a, 7a
- 310: providing alignment network 10
- 320: providing alignment training samples 11
- 330: encoding sequences 2 in training samples 11 to representations 2a
- 340: decoding representations 2a to temporally aligned composition 2b'
- 350: measuring agreement between compositions 2b' and 2b
- 360: optimizing parameters 4a, 10a

## Claims

1. A computer-implemented method (100) for evaluating at least one multivariate temporal sequence (2) of measurement values obtained from an industrial plant (1) with respect to at least one sought property and/or quantity (3) that serves to improve the multivariate temporal sequence (2), and/or that is indicative of an operating state, and/or of a key performance indicator, of the industrial plant (1) or a process executed on it, the method (100) comprising the steps of:
• encoding (110), by at least one trained encoder network (4), the at least one sequence of measurement values (2) into a representation (2a) with a predetermined dimensionality that is independent of the length of the sequence (2) in time; and
• evaluating (120), from this representation (2a), the sought property and/or quantity (3).

2. The method (100) of claim 1, wherein the encoder network (4) is chosen (111) to be an encoder part of an encoder-decoder arrangement that is trained in a self-supervised manner.

3. The method (100) of claim 2, wherein an encoder-decoder arrangement is chosen that first maps a multivariate temporal sequence (2) of measurement values to a representation (2a) and then reconstructs the multivariate temporal sequence (2) of measurement values from this representation (2a).

4. The method (100) of any one of claims 1 to 3,
wherein the evaluating (120) of the sought property and/or quantity (3) comprises:
• evaluating (121) distances and/or similarities between representations (2a) obtained from multiple multivariate temporal sequences (2); and/or
• grouping (122) representations (2a) obtained from multiple multivariate temporal sequences (2) into one or more clusters.

5. The method (100) of claim 4, wherein the representations (2a) are grouped (122a) into one single cluster, and in response to a representation (2a) not being a member of this one single cluster (122b), the multivariate temporal sequence (2) from which this representation (2a) was derived is determined (122c) to be indicative of an abnormal operating state and/or key performance indicator.

6. The method (100) of any one of claims 1 to 5,
wherein the evaluating (120) of the sought property and/or quantity comprises:
• computing (123) at least one statistical quantity over a collection of representations (2a) obtained from multiple multivariate temporal sequences (2); and
• evaluating (124) the sought property and/or quantity (3) from the at least one statistical quantity.

7. The method (100) of any one of claims 1 to 6,
wherein the evaluating (120) of the sought property and/or quantity (3) comprises mapping (125), by means of a trained task machine learning model (5), the representation (2a) to the sought property and/or quantity (3).

8. The method (100) of claim 7, wherein the trained task machine learning model (5) is chosen to comprise a classifier, and/or a regressor, and/or a reinforcement learner.

9. The method (100) of claim 7 or 8, wherein the evaluating of the sought property comprises mapping (125a), by the trained task machine learning model (5), multiple representations (2a) of multiple multivariate temporal sequences (2) to a temporally aligned composition (2b) of the multiple multivariate temporal sequences (2).

10. The method (100) of any one of claims 1 to 9, further comprising: determining (130), using the sought property and/or quantity (3), at least one action (6) to be taken in the industrial plant (1) in order to improve the property and/or quantity (3).

11. The method (100) of claim 10, wherein, in response to determining (131) that a first representation (2a) is close and/or similar to a second representation (2a) as per a predetermined criterion, a to-be-taken action (6) in the plant (1) that is stored in association with the first representation (2a) is determined (132) as a to-be-taken action (6) in a situation **characterized by** the second representation (2a).

12. The method (100) of any one of claims 1 to 11,
wherein the industrial plant (1) is chosen to be
• a production plant for:
∘ at least one chemical mixture and/or compound, and in particular: butadiene, and/or a liquid detergent, and/or a color, and/or a coating; and/or
∘ at least one food or beverage, and in particular an at least partially fermented food or beverage; and/or
∘ plastic pellets; and/or
• a waste incineration plant;
• a hydrocarbon separation plant;
• a reinjection system for injecting water into a hydrocarbon well;
• a hydrocarbon exploitation facility; and/or
• a deglycol regeneration plant.

13. A computer-implemented method (200) for training at least one encoder network (4) for use in the method (100) of any one of claims 1 to 12, comprising the steps of:
• providing (210) an encoder-decoder arrangement comprising the to-be-trained encoder network (4) and a to-be-trained decoder network (7);
• obtaining (220) a plurality of training samples (8), each training sample (8) comprising a multivariate temporal sequence (2) of measurement values from an industrial plant (1); and for each training sample (8):
• encoding (230), by the to-be-trained encoder network (4), the multivariate temporal sequence (2) into a representation (2a);
• decoding (240), by the to-be-trained decoder network (7), a multivariate temporal sequence (2') of values from the representation (2a);
• measuring (250), by means of a predetermined loss function (9), to which extent this multivariate sequence (2') is in agreement with the multivariate temporal sequence (2) in the training sample (8); and
• optimizing (260) parameters (4a, 7a) that characterize the behavior of the to-be-trained encoder (4) and the to-be-trained decoder (7) such that, when further training samples (8) are processed, the rating (9a) by the loss function (9) is likely to improve.

14. The method (200) of claim 13, wherein the obtaining (220) a plurality of training samples comprises:
• sub-dividing (221) a given multivariate temporal sequence of measurement values into multiple sub-sequences, and
• using (222) these sub-sequences as multivariate temporal sequences (2) in the training samples (8).

15. The method (200) of any one of claims 13 to 14, further comprising:
• providing (310) at least one to-be-trained alignment network (10) that is configured to map multiple representations (2a) to a temporally aligned composition (2b) of multiple multivariate temporal sequences (2) of measurement values;
• providing (320) alignment training samples (11), wherein each alignment training sample (11) comprises multiple multivariate temporal sequences (2) of measurement values, as well as a temporally aligned composition (2b) of these multiple multivariate temporal sequences (2) as ground truth;
• encoding (330), by the at least one encoder network (4), the multivariate temporal sequences (2) in the alignment training samples (11) to representations (2a);
• decoding (340), by the at least one alignment network (10), the representations (2a) to a temporally aligned composition (2b') of the multiple multivariate temporal sequences (2);
• measuring (350), by means of an alignment loss function (12), to which extent this temporally aligned composition (2b') is in agreement with the ground truth temporally aligned composition (2b); and
• optimizing (360) parameters (4a, 10a) that characterize the behavior of the encoder network (4) and the alignment network (10) such that, when further alignment training samples (11) are processed, the rating (12a) by the alignment loss function (12) is likely to improve.

16. One or more computer programs, containing machine-readable instructions that, when executed on one or more computers, cause the one or more computers to perform a method (100, 200) of any one of claims 1 to 15.

17. A non-transitory storage medium and/or a download product with the computer program of claim 16.

18. One or more computers with the computer program of claim 16, and/or with the non-transitory storage medium and/or download product of claim 17.
